# EUROPÄISCHE PATENTSCHRIFT

(11) **EP 0 704 288 B1**
(45) Veröffentlichungstag und Bekanntmachung des Hinweises auf die Patenterteilung: **07.04.1999**
(21) Anmeldenummer: 95115022.6
(22) Anmeldetag: 25.09.1995
(51) Int. Cl.: B29C 43/24, B29C 47/92

(54) **Vorrichtung zur Steuerung der Wulsthöhe bei der Herstellung von beidseitig geglätteten Folien und Platten**
Apparatus for controlling the bank size in the production of films and sheets
Appareil pour contrôler l'entassement de matière au cours du calandrage de feuilles ou de plaques

(30) Priorität: 27.09.1994 DE 9415619 U
(43) Veröffentlichungstag der Anmeldung: 03.04.1996
(73) Patentinhaber: Röhm GmbH, 64293 Darmstadt (DE)
(72) Erfinder: Meier-Kaiser, Michael, Dr., D-64319 Pfungstadt (DE); Greb, Horst, Dr., D-64372 Ober-Ramstadt (DE)

(56) Entgegenhaltungen:
- EP-A- 0 273 985
- EP-A- 0 429 161
- WO-A-94/06616
- PATENT ABSTRACTS OF JAPAN vol. 8 no. 112 (M-298) ,25.Mai 1984 & JP-A-59 020626 (ISHIKAWAJIMA HARIMA JUKOGYO) 2.Februar 1984,

## Beschreibung

### Gebiet der Erfindung

Die Erfindung betrifft das Gebiet der Extrusionstechnik für thermoplastisch verformbare Kunststoffe, insbesondere die Steuerung der Wulsthöhe im Glättwerkspalt bei Walzenglättwerken zur Extrusion von beidseitig geglätteten Kunststoffbahnen für Platten oder Folien.

### Stand der Technik

Extrusionsanlagen für thermoplastische Kunststoffe sind bekannt. Zur beidseitigen Glättung der Oberflächen von Kunststoffbahnen für Platten oder Folien werden üblicherweise Walzenglättwerke eingesetzt. Die Walzen haben dabei die Aufgabe den geschmolzenen Kunststoff zu formen und abzukühlen. Die Walzen nehmen den aus einer Breitschlitzdüse im geschmolzenen Zustand senkrecht austretenden Kunststoff in den Glättwerkspalt zwischen zwei angetriebenen Einlaufwalzen auf. Meist wird die Kunststoffbahn über eine der Einlaufwalzen abgenommen und mit Hilfe einer weiteren Walze die wiederum an die Einlaufwalze drückt in die Waagerechte umgelenkt. Durch das Hindurchdrücken durch den Glättwerkspalt zwischen den Einlaufwalzen erhält die Kunststoffbahn eine definierte Dicke und eine glatte Oberfläche.

Faktoren, die die Oberflächenbeschaffenheit von Kunststoffbahnen für beidseitig geglättete Platten und Folien beeinflussen sind die Zusammensetzung des Polymers, die Temperatur und die Viskosität des Polymerschmelzestroms, die Temperatur und Oberflächenbeschaffenheit der Walzen, die Größe des Glättwerkspalts und die Walzengeschwindigkeit.

Ein gleichmäßiges Passieren des Kunststoffs durch den Glättwerkspalt ist dabei außerordentlich wichtig für eine einwandfreie Oberflächenbeschaffenheit des extrudierten Materials. Eine hohe Bedeutung zur Vermeidung von Oberflächenstörungen kommt dabei der Höhe des sogenannten Wulstes zu, der sich im Glättwerkspalt zwischen den Einlaufwalzen durch den Rückstau der Polymerschmelze ausbildet. Schwankungen durch lokale Massestromunterschiede in der die Extrusionsdüse verlassenden Polymerschmelze führen zu unterschiedlichen Schmelzebeschleunigungen an der Oberflächen der Einlaufwalzen, wodurch sich auch die Höhe des Wulstes verändert.

Die Höhe des Wulstes soll nur innerhalb möglichst kleiner Toleranzen schwanken. Ist sie zu niedrig kann die Berührung des Extrudats an der Walze 1 verlorengehen. Dies hat eine schlechte Extrudatoberfläche zur Folge oder kann aufgrund der stark veränderten Abkühlbedingungen zum Klebenbleiben an der Walze 2 führen. Das sogenannte Wickel führt dann zum Zusammenbruch des Prozesses und mehrstündigem Anlagenstillstand.

Ein zu hoher Wulst führt zu Störungen der Extrudatoberfläche durch das sogenannte Wulstrollen. Dabei wird der Wulst durch die Berührung mit dem einlaufenden Extrudatstrom von oben aus schlaufenartig eingezogen und gewissermaßen eingerollt. Dies führt zu quer zur Extrudatoberfläche verlaufenden Schlierenbildungen. Im Extremfall kann der Stauwulst auch die Düsenlippe erreichen und diese verschmutzen, was wiederum zur Störung der Extrudatoberfläche führt. Die Reinigung der Düse kann nur bei Anlagenstillstand erfolgen.

Es sind mehrere Regelverfahren für die Wulsthöhe bekannt. In der Praxis gebräuchlich ist, daß über eine Dickenmessung der erkalteten Kunststoffbahn eine manuelle Nachregelung der Wulsthöhe über die Veränderung der Walzengeschwindigkeit erfolgt. Dieses Verfahren hat den Nachteil, daß der Eingriff manuell vorgenommen wird und somit subjektiven Einflüssen unterliegt. Durch die relativ späte Dickenmessung kommt es zudem zu einem vergleichweise hohen Ausschuß bis die Einstellungen innerhalb der angestrebten Toleranz liegen.

Weiterhin sind direkte Messungen der Wulsthöhe durch mechanische Fühler oder nach der Laser-Triangulationsmethode bekannt. Die mechanische Methode ist sehr ungenau, während die optische Methode den Nachteil hat, daß sie durch die im Bereich des Stauwulstes auftretenden hohen Temperaturen und der dadurch verursachten Dichtefluktuation der Luft fehlerträchtig ist.

Eine mit Hilfe eines Stellkreises arbeitende automatische Regelung ist aus DE 40 33 661 C2 bekannt. An einer der Einlaufwalzen wird kontinuierlich der Lagerdruck als Maß für die Dicke der Materialbahn gemessen und über die Walzengeschwindigkeit geregelt. Da der Lagerdruck jedoch nicht nur von der Dicke der Materialbahn sondern auch von der Viskosität und der Temperatur des Kunststoffstroms abhängig ist, ist auch diese Regelung unbefriedigend.

Aus DE-U-92 12 406 ist eine Regelung der Wulsthöhe für die Extrusion von transparenten Folien mit einer Dicke unter 5 mm bekannt. Hier wird die Messung der Orientierungsdoppelbrechung der extrudierten Folie als Maß für die Wulsthöhe herangezogen und durch die Veränderung der Einstellung des Massestroms der Extrusionsdüse geregelt.

Das GR-Patent 85.1420 beschreibt eine Vorrichtung zur Steuerung der Wulsthöhe bei der Herstellung einer beidseitig geglätteten Kunststoffbahn. Die Größe des Wulstes wird konstant gehalten, indem die Oberflächentemperatur der Bahn nach dem Austritt aus dem Walzenspalt als Information verwendet wird. Beim Abweichen von der zum konstanten Betriebszustand im kontinuierlichen Betrieb gehörenden Solltemperatur wird der Formmassenausstoß vergrößert bzw. vermindert. Das Verfahren hat den Nachteil, daß es zu ungenau ist.

Vorrichtungen, die eine Steuerung der Wulsthöhe mittels einer Breitenmessung des extrudierten Materials vornehmen sind nicht bekannt.

### Aufgabe und Lösung

Die Aufgabe der vorliegenden Erfindung war es, eine Vorrichtung für Walzenglättwerke für Platten oder Folien zu entwickeln, die eine Steuerung der Wulsthöhe mittels einer einfachen aber sehr sensitiven Stellgröße ermöglicht.

Die Aufgabe wird gelöst durch eine Vorrichtung zur Steuerung der Wulsthöhe im Glättwerkspalt eines Walzenglättwerks bei der Extrusion von beidseitig geglätteten Platten oder Folien aus thermoplastischen Kunststoff, dadurch gekennzeichnet, daß Meßsensoren enthalten sind, die die Position der Ränder der extrudierten Kunststoffbahn hinter dem Glättwerkspalt registrieren und ihre Meßwerte an einen elektronischen Regler weitergeben, der bei Abweichungen von vorgegebenen Sollwerten eine Stellgröße, die die Wulsthöhe beeinflußt, so regelt, daß die Sollwerte wieder erreicht werden.

Die Erfindung basiert dabei auf dem Zusammenhang zwischen der Breite der Kunststoffbahn und der Wulsthöhe. Abweichungen von der zulässigen Wulsthöhe führen zu Änderungen in der Breite der Kunststoffbahn, die von den Meßsensoren registriert werden und über einen Regelkreis zu einer Veränderung der Stellgrößen wie z. B. Walzengeschwindigkeit oder Polymerschmelzeaustoß führen.

Der Vorteil der Erfindung liegt insbesondere darin, daß die Breite der Kunststoffbahn ein besonders sensitiver Indikator für die Veränderung der Wulsthöhe ist. Naturgemäß sind Platten und Folien viel breiter als dick. Veränderungen in der Wulsthöhe führen daher zu größeren Meßwertdifferenzen in der Breite als in der Dicke des Materials. Die Folge ist eine hohe Sensitivität. Darüberhinaus ist die Vorrichtung sowohl für Folien als auch für Platten handelsüblicher Dicken von etwa 100 µm bis zu 50 mm unabhängig von ihrer Transparenz geeignet,
Die Erfindung wird durch die nachstehenden Figuren erläutert, ist aber nicht auf die dargestellten Ausführungsformen beschränkt.
**Figur 1**: Schematische Darstellung eines Walzenglättwerks mit drei Walzen quer zur Extrusionsrichtung, bei dem die Position der Meßsensoren unterhalb der Walze 2 eingezeichnet ist. Sichtbar ist nur der in Blickrichtung vorne liegende Meßsensor.
**Figur 2**: Schematische Darstellung eines Walzenglättwerks mit drei Walzen quer zur Extrusionsrichtung, bei dem die Position der Meßsensoren hinter der Walze 3 eingezeichnet ist. Sichtbar ist nur der in Blickrichtung vorne liegende Meßsensor.

Die Bezugszeichen werden wie folgt verwendet.
1: Walze 1 des Walzenglättwerks
2: Walze 2 des Walzenglättwerks
3: Walze 3 des Walzenglättwerks
4: Extrusionsdüse von der Seite
5: Extrusionsdüsenlippe von der Seite
6: Polymerschmelze
7: Wulst
8: Meßsensor
9: Wulsthöhe

### Ausführung der Erfindung

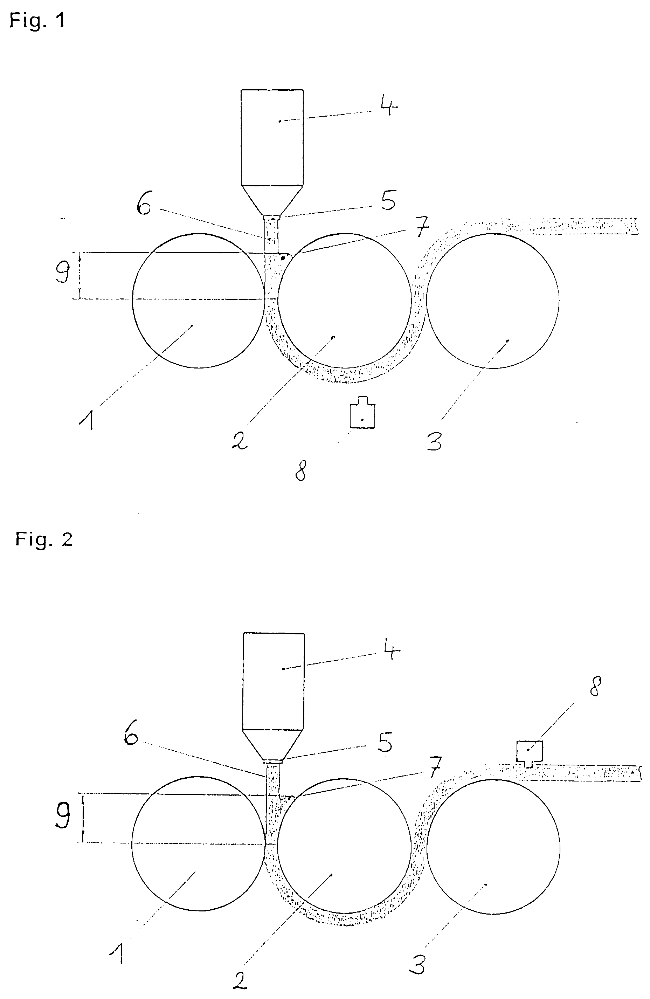

An einem Walzenglättwerk werden hinter dem Glättwerkspalt paarweise am rechten und am linken Rand Meßsensoren zur Registrierung der Lage der Ränder der Kunststoffbahn installiert. Die Anbringung kann im Prinzip an fast allen Positionen hinter dem Glättwerkspalt erfolgen. Im Interesse möglichst geringer Reaktionszeiten ist eine Meßwertabnahme an der Kunststoffbahn in nicht zu weiter Entfernung hinter dem Glättwerkspalt bevorzugt. Eine besonders geeignete Position ist bei einem Glättwerk mit drei Walzen die Walze 2 (Figur 1). Unabhängig von der Zahl der vorhandenen Walzen ist eine Position hinter dem Glättwerk geeignet. Diese Position kann z.B. bei einem Dreiwalzen-Glättwerk unmittelbar hinter der Walze 3 liegen (Figur 2).

In der Regel werden zwei gleiche Meßsensoren für die Registrierung der Lage des linken und des rechten Randes der Kunststoffbahn verwendet. Dem Fachmann sind zahlreiche geeignete Meßsensoren bekannt. Es können z.B. optische, thermographische oder mechanische Meßsensoren verwendet werden. Bevorzugt sind Infrarot-Meßsensoren, die den Grenzverlauf der Kante der heißen Kunststoffbahn gegenüber der kälteren Walze rasterartig registrieren und so eine Art thermographisches Bild verarbeiten. Insbesondere für die Abnahme der Meßwerte an der Walze 2 können solche Infrarot-Meßsensoren bevorzugt verwendet werden. Geeignet sind auch Berührungssensoren, die direkt auf Kontakt mit der Außenkante reagieren. Solche Sensoren sind für die Meßwertabnahme hinter der Walze 3 besonders geeignet.

Während der Extrusion registrieren die Meßsensoren die Lage des rechten und linken Randes der Kunststoffbahn als Information über ihre Breite. Die Werte werden on-line an einen handelsüblichen elektronischen Regler weitergeleitet und dort mittels eines entsprechenden Rechnerprogramms verarbeitet. Die erfindungsgemäße Vorrichtung basiert auf der Proportionalität von Schwankungen in der Breite der Kunststoffbahn und der Höhe des Wulstes. Die Proportionalitätsverhältnisse sind spezifisch für die jeweilige Extrusionsanlage, den verarbeiteten Kunststoff, die Extrusionsbedingungen und die Breite und Höhe der Kunststoffbahn. Die jeweiligen Verhältnisse müssen daher bei der Einführung von neuen Verfahren zunächst empirisch ermittelt werden und dann in an sich bekannter Weise als Grundlage für das Rechnerprogramm verwendet werden.

Der Regler reagiert auf zu große Breiten, die von einem zu hohen Wulst verursacht sind, mit der Erhöhung der Walzengeschwindigkeit. Umgekehrt wird die Walzengeschwindigkeit bei zu geringer Breite verlangsamt, um die Wulsthöhe wieder auf den Soll-Wert zu erhöhen. Alternativ zur Regelung der Walzengeschwindigkeit ist auch eine Regelung des Polymerschmelzestroms möglich. Diese kann z.B. durch die Veränderung der Geschwindigkeit der Extruderschnecke oder der Zahnradschmelzepumpe erfolgen.

Der Vorteil der Vorrichtung besteht vor allem in ihrem einfachen Aufbau, ihrer hohen Sensitivität und in ihrer universellen Anwendbarkeit. Eine Korrektur der Walzengeschwindigkeit ist möglich wenn Veränderungen in der Dicke oder Wulsthöhe praktisch noch nicht oder nur mit außerordentlich aufwendigen Mitteln registrierbar wären. Dadurch ergibt sich eine sehr feine indirekte Regelung der Wulsthöhe. Das Extrusionsverfahren kann auf diese Weise zuverlässig und mit vermindertem Ausschuß durchgeführt werden. Die Vorrichtung kann sowohl für die Extrusion von Platten als bei der Folien-Extrusion in Bereichen von ca. 100 µm bis 50 mm Dicke beliebiger transparenter oder nicht transparenter Kunststoffe verwendet werden.

### BEISPIEL

### Das folgende Beispiel beschreibt die Extrusion einer Folie aus Bisphenol-A-Polycarbonat mit 2 mm Dicke und 1000 mm Breite

Die Temperatur der Kunststoffschmelze beträgt beim Austritt aus der Extrusionsdüse (4) ca. 280 Grad C. Unter der Extrusionsdüsenlippe (5) befindet sich ein Walzenglättwerk mit drei hochglänzend verchromten Kalander-Walzen (1,2 und 3) von 200 mm Durchmesser und 1500 mm Breite. Die Polymerschmelze (6) passiert den Glättwerkspalt zwischen den Walzen 1 und 2 unter Ausbildung eines Wulstes (7). Die Kunststoffbahn wird von der Walze 2 (2) auf die Walze 3 (3) umgelegt.

Die Temperatur der Walzenoberflächen wird auf 100 Grad Celsius eingeregelt. Unterhalb der Walze 2 (2) sind in einem Abstand von 100 mm zur Walze und von 1000 mm (entsprechend der Folienbreite) voneinander zwei Infrarot-Meßsensoren (8) angebracht. Diese registrieren rasterartig den Grenzverlauf zwischen der auf ca. 160 Grad abgekühlten Kunststoffbahn und der Walze 2 und liefern damit ein Signal, das der Breite der Folie entspricht.

Die Sensoren sind mit einem elektronischen Regler verbunden, der über ein Rechnerprogramm gesteuert wird. Dieser ermittelt aus den Meßsignalen der Sensoren am linken und rechten Rand der Kunststoffbahn die Übereinstimmung oder Abweichung von einem vorgegebenen Sollwert für die Breite der Kunststoffbahn. Das Rechnerprogramm ist so ausgelegt, daß auf Meßsignale, die Abweichungen von mehr als 0,1 mm in der Breite bedeuten, eine entsprechende Korrektur der Walzengeschwindigkeit erfolgt, wodurch die Wulsthöhe (9) innerhalb geringer Toleranzen gehalten wird.

## Patentansprüche

1. Vorrichtung zur Steuerung der Wulsthöhe (9) im Glättwerkspalt eines Walzenglättwerks bei der Extrusion von beidseitig geglätteten Platten oder Folien aus thermoplastischem Kunststoff,
dadurch gekennzeichnet, daß
Meßsensoren (8) enthalten sind, die die Position der Ränder der extrudierten Kunststoffbahn hinter dem Glättwerkspalt registrieren und ihre Meßwerte an einen elektronischen Regler weitergeben, der bei einer Abweichung von vorgegebenen Sollwerten eine Stellgröße, die die Wulsthöhe (9) beeinflußt, so regelt, daß die Sollwerte wieder erreicht werden.

2. Vorrichtung nach Anspruch 1, dadurch gekennzeichnet, daß die Stellgröße die Walzengeschwindigkeit ist.

3. Vorrichtung nach Anspruch 1, dadurch gekennzeichnet, daß die Stellgröße der Ausstoß der Polymerschmelze (6) ist.

4. Vorrichtung nach einem oder mehreren der Ansprüche 1 bis 3, dadurch gekennzeichnet, daß die Meßsensoren so angeordnet sind, daß sie die Position der Ränder der Kunststoffbahn an der Walze 2 (2) des Walzenglättwerks registrieren.

5. Vorrichtung nach einem oder mehreren der Ansprüche 1 bis 4, dadurch gekennzeichnet, daß die Meßsensoren so angeordnet sind, daß sie die Position der Ränder der Kunststoffbahn hinter der Walze 3 (3) des Walzenglättwerks registrieren.

## Claims

1. An apparatus for controlling the bulge height (9) in the calender nip of a calender on extrusion of plates or fails, smoothed on both sides, of thermoplastic synthetic material, characterised in that measuring sensors (8) are contained, which register the position of the edges of the extruded web behind the calender nip and pass their measured values on to an electronic controller which adjusts a regulated quantity so that the specified values are again attained on deviation from prescribed specified values which influence the bulge height (9).

2. An apparatus according to claim 1, characterised in that the regulated quantity is the roller speed.

3. An apparatus according to claim 1, characterised in that the regulated quantity is the output of the polymer melt (6).

4. An apparatus according to one or more of claims 1 to 3, characterised in that the measuring sensors are arranged so that they register the position of the edges of the web of synthetic material on the roller 2 (2) of the calender.

5. An apparatus according to one or more of claims 1 to 4, characterised in that the measuring sensors are arranged so that they register the position of the edges of the web of synthetic material behind the roller 3 (3) of the calender.

## Revendications

1. Dispositif de commande de la hauteur du renflement(9) dans un intervalle de calandrage d'un dispositif de calandrage selon lequel l'extrusion des plaques lissées des deux côtés ou des feuilles en matière thermoplastique,
caractérisé en ce qu'
il comprend :
- des capteurs de mesure (8) qui enregistrent la position des bords de la bande de matière plastique extrudée en aval de l'intervalle de lissage et transmettent leurs valeurs de mesure a un régulateur électronique qui, pour une déviation par rapport aux valeurs de consigne prédéterminées, régule une grandeur de réglage qui influence la hauteur (9) du renflement pour atteindre de nouveau la valeur de consigne.

2. Dispositif selon la revendication 1,
caractérisé en ce que
la grandeur de réglage est la vitesse des cylindres.

3. Dispositif selon la revendication 1,
caractérisé en ce que
la grandeur de réglage est le débit du bain de polymère fondu (6).

4. Dispositif selon l'une quelconque des revendications 1 à 3,
caractérisé en ce que
les capteurs de mesure sont disposés pour enregistrer la position des bords de la matière plastique au niveau du cylindre 2(2) du dispositif de calandrage.

5. Dispositif selon l'une quelconque des revendications 1 à 4,
caractérisé en ce que
les capteurs de mesure sont disposés pour enregistrer la position des bords de la bande de matière plastique en aval du cylindre 3(3) du dispositif de calandrage.
